# EUROPÄISCHE PATENTANMELDUNG

(11) **EP 2 829 868 A1**
(43) Veröffentlichungstag der Anmeldung: **28.01.2015**
(21) Anmeldenummer: 14002595.8
(22) Anmeldetag: 25.07.2014
(51) Int. Cl.: G01N 21/94

(54) **Verfahren zum Nachweisen von Verschmutzungen auf einer Oberfläche**

(30) Priorität: 26.07.2013 EP 13003748
(71) Anmelder: Dr. Becher GmbH, 30926 Seelze (DE)
(72) Erfinder: Pfundt, Jörg, D-30926 Seelze (DE)
(74) Vertreter: Bohmann, Armin K.

(57) **Zusammenfassung**

Die vorliegende Erfindung betrifft ein Verfahren zum Nachweisen einer Verschmutzung auf einer Oberfläche, umfassend die folgenden Schritte:
- Aufbringen eines Schaumes einer wässrigen Lösung auf die Oberfläche, und
- Bestimmen, ob an einer oder mehreren Stellen der Oberfläche von dem Schaum gebildeten Schaumlamellen gebrochen werden, und/oder
- Bestimmen, ob an einer oder mehreren Stellen der Oberfläche die Elastizität des Schaumes verringert wird,

wobei eine Verschmutzung vorliegt, wenn die gebildeten Schaumlamellen gebrochen sind und/oder die Elastizität des Schaumes verringert ist.

## Beschreibung

Die vorliegende Erfindung betrifft ein Verfahren zum Nachweisen von Verschmutzungen auf Oberflächen, die Verwendung einer wässrigen Lösung, die Verwendung eines Schaumes, der auf der Grundlage der wässrigen Lösung hergestellt ist, und die Verwendung eines Sprühkopfes.

Mit der zunehmenden Urbanisierung des menschlichen Lebens und der damit verbundenen hohen Bevölkerungsdichte ergibt sich die Notwendigkeit eines besonders hohen Hygienestandards in allen öffentlichen Räumen. Neben der Reinigung des öffentlichen Raumes insbesondere im Lebensmittel- und Sanitärbereich als solches kommt der Kontrolle der Reinigung bzw. der Wirksamkeit der ergriffenen Reinigungsmaßnahmen eine zentrale Bedeutung zu. Dabei hat sich die Kontrolle mit dem unbewaffneten Auge als nicht ausreichend erwiesen, da auch für das menschliche Auge nicht sichtbare Verschmutzungen im Lebensmittel- und Sanitärbereich nicht toleriert werden können.

Im Lichte dessen besteht ein Bedarf an Verfahren und Mitteln zum Durchführen derartiger Verfahren, die einen Nachweis von Verschmutzungen, insbesondere von Verschmutzungen erlauben, die mit dem unbewaffneten menschlichen Auge nicht zu erkennen und damit nicht nachzuweisen sind.

Diese und andere Aufgaben werden durch den Gegenstand der beigefügten Ansprüche gelöst. Bevorzugte Ausführungsformen ergeben sich aus den Unteransprüchen.

Die der vorliegenden Erfindung zu Grunde liegenden Aufgaben werden in einem ersten Aspekt, der auch die erste Ausführungsform des ersten Aspektes ist, gelöst durch ein Verfahren zum Nachweisen einer Verschmutzung auf einer Oberfläche, umfassend die folgenden Schritte:
- Aufbringen eines Schaumes einer wässrigen Lösung auf die Oberfläche, und
- Bestimmen, ob an einer oder mehreren Stellen der Oberfläche von dem Schaum gebildeten Schaumlamellen gebrochen werden, und/oder
- Bestimmen, ob an einer oder mehreren Stellen der Oberfläche die Elastizität des Schaumes verringert wird,
wobei eine Verschmutzung vorliegt, wenn die gebildeten Schaumlamellen gebrochen sind und/oder die Elastizität des Schaumes verringert ist.

In einer zweiten Ausführungsform des ersten Aspektes, die auch eine Ausführungsform der ersten Ausführungsform des ersten Aspektes ist, werden die gebildeten Schaumlamellen schneller gebrochen an einer Stelle der Oberfläche, die eine Verschmutzung aufweist, als an einer Stellen der Oberfläche, die keine Verschmutzung aufweist.

In einer dritten Ausführungsform des ersten Aspektes, die auch eine Ausführungsform der ersten und zweiten Ausführungsform des ersten Aspektes ist, ist die Elastizität des Schaumes stärker verringert oder schneller verringert an einer Stelle der Oberfläche, die eine Verschmutzung aufweist, als an einer Stellen der Oberfläche, die keine Verschmutzung aufweist.

Die der vorliegenden Erfindung zu Grunde liegenden Aufgaben werden in einem zweiten Aspekt, der auch die erste Ausführungsform des zweiten Aspektes ist, gelöst durch ein Verfahren zum Nachweisen einer Verschmutzung auf einer Oberfläche, wobei das Verfahren Aufbringen eines Schaumes einer wässrigen Lösung auf die Oberfläche umfasst, wobei der Schaum an der Stellte der Oberfläche zerfällt, die die Verschmutzung aufweist. Das Verfahren gemäß dem zweiten Aspekt und insbesondere gemäß der ersten Ausführungsform des zweiten Aspektes stellt auch eine vierte Ausführungsform des ersten Aspektes dar, wobei die vierte Ausführungsform des ersten Aspektes auch eine Ausführungsform der ersten, zweiten und dritten Ausführungsform des ersten Aspektes ist.

In einer zweiten Ausführungsform des zweiten Aspektes, die auch eine Ausführungsform der ersten Ausführungsform des zweiten Aspektes ist, und in einer fünften Ausführungsform des ersten Aspektes, die auch eine Ausführungsform der ersten, zweiten, dritten und vierten und fünften Ausführungsform des ersten Aspektes ist, zerfällt der Schaum an der Stelle der Oberfläche schneller, die die Verschmutzung aufweist, als der Schaum an einer Stelle der Oberfläche, die keine Verschmutzung aufweist.

In einer dritten Ausführungsform des zweiten Aspektes, die auch eine Ausführungsform der ersten und zweiten Ausführungsform des zweiten Aspektes ist, und in einer sechsten Ausführungsform des ersten Aspektes, die auch eine Ausführungsform der ersten, zweiten, dritten, vierten, fünften und sechsten Ausführungsform des ersten Aspektes ist, ist der Schaum ein Polyederschaum oder ein Kugelschaum.

In einer vierten Ausführungsform des zweiten Aspektes, die auch eine Ausführungsform der dritten Ausführungsform des zweiten Aspektes ist, und in einer siebten Ausführungsform des ersten Aspektes, die auch eine Ausführungsform der sechsten Ausführungsform des ersten Aspektes ist, ist der Schaum ein Polyederschaum.

In einer fünften Ausführungsform des zweiten Aspektes, die auch eine Ausführungsform der dritten Ausführungsform des zweiten Aspektes ist, und in einer achten Ausführungsform des ersten Aspektes, die auch eine Ausführungsform der sechsten Ausführungsform des ersten Aspektes ist, ist der Schaum ein Kugelschaum.

In einer sechsten Ausführungsform des zweiten Aspektes, die auch eine Ausführungsform der ersten, zweiten, dritten, vierten und fünften Ausführungsform des zweiten Aspektes ist, und in einer neunten Ausführungsform des ersten Aspektes, die auch eine Ausführungsform der ersten, zweiten, dritten, vierten, fünften, sechsten, siebten und achten Ausführungsform des ersten Aspektes ist, umfasst die wässrige Lösung ein Lösemittel.

In einer siebten Ausführungsform des zweiten Aspektes, die auch eine Ausführungsform der ersten, zweiten, dritten, vierten, fünften und sechsten Ausführungsform des zweiten Aspektes ist, und in einer zehnten Ausführungsform des ersten Aspektes, die auch eine Ausführungsform der ersten, zweiten, dritten, vierten, fünften, sechsten, siebten, achten und neunten Ausführungsform des ersten Aspektes ist, umfasst die wässrige Lösung eine alkalisch reagierende Verbindung.

In einer achten Ausführungsform des zweiten Aspektes, die auch eine Ausführungsform der ersten, zweiten, dritten, vierten, fünften, sechsten und siebten Ausführungsform des zweiten Aspektes ist, und in einer elften Ausführungsform des ersten Aspektes, die auch eine Ausführungsform der ersten, zweiten, dritten, vierten, fünften, sechsten, siebten, achten, neunten und zehnten Ausführungsform des ersten Aspektes ist, umfasst die wässrige Lösung ein Lösemittel und eine alkalisch reagierende Verbindung.

In einer neunten Ausführungsform des zweiten Aspektes, die auch eine Ausführungsform der ersten, zweiten, dritten, vierten, fünften, sechsten, siebten und achten Ausführungsform des zweiten Aspektes ist, und in einer zwölften Ausführungsform des ersten Aspektes, die auch eine Ausführungsform der ersten, zweiten, dritten, vierten, fünften, sechsten, siebten, achten, neunten, zehnten und elften Ausführungsform des ersten Aspektes ist, umfasst die wässrige Lösung eine grenzflächenaktive Substanz, bevorzugterweise ein Tensid.

In einer zehnten Ausführungsform des zweiten Aspektes, die auch eine Ausführungsform der ersten, zweiten, dritten, vierten, fünften, sechsten, siebten, achten und neunten Ausführungsform des zweiten Aspektes ist, und in einer 13. Ausführungsform des ersten Aspektes, die auch eine Ausführungsform der ersten, zweiten, dritten, vierten, fünften, sechsten, siebten, achten, neunten, zehnten, elften und zwölften Ausführungsform des ersten Aspektes ist, umfasst die wässrige Lösung
a) ein Lösemittel und ein Tensid, oder
b) eine alkalisch reagierende Verbindung und eine Tensid, oder
c) ein Lösemittel, eine alkalisch reagierende Verbindung und ein Tensid umfasst.

In einer elften Ausführungsform des zweiten Aspektes, die auch eine Ausführungsform der sechsten, siebten, achten, neunten und zehnten Ausführungsform des zweiten Aspektes ist, und in einer 14. Ausführungsform des ersten Aspektes, die auch eine Ausführungsform der neunten, zehnten, elften, zwölften und 13. Ausführungsform des ersten Aspektes ist, ist das Lösemittel ausgewählt aus der Gruppe umfassend Ethanol, Isopropanol, Butylglycol, n-Butanol, sekundäres Butanol, Monopropylgycol, Dipropylenglycol, Monoethylenglycol, Diethylengylcol und Kombinationen davon.

In einer zwölften Ausführungsform des zweiten Aspektes, die auch eine Ausführungsform der elften Ausführungsform des zweiten Aspektes ist, und in einer 15. Ausführungsform des ersten Aspektes, die auch eine Ausführungsform der 14. Ausführungsform des ersten Aspektes ist, ist das Lösemittel eine Kombination aus mindestens einem ersten und einem zweiten Lösemittel ist.

In einer 13. Ausführungsform des zweiten Aspektes, die auch eine Ausführungsform der zwölften Ausführungsform des zweiten Aspektes ist, und in einer 16. Ausführungsform des ersten Aspektes, die auch eine Ausführungsform der 15. des ersten Aspektes ist, ist das Lösemittel eine Kombination aus einem ersten und einem zweiten Lösemittel, wobei das erst Lösemittel ausgewählt ist aus der Gruppe umfassend Butylglycol, n-Butanol, sekundäres Butanol, Monopropylgycol, Dipropylenglycol, Monoethylenglycol, Diethylengylcol, und wobei das zweite Lösemittel ausgewählt ist aus der Gruppe umfassend Ethanol und Isopropanol.

In einer 14. Ausführungsform des zweiten Aspektes, die auch eine Ausführungsform der zwölften und 13. Ausführungsform des zweiten Aspektes ist, und in einer 17. Ausführungsform des ersten Aspektes, die auch eine Ausführungsform der 15. und der 16. Ausführungsform des ersten Aspektes ist, ist das erste Lösemittel Butylglycol und das zweite Lösemittel Ethanol oder Isopropanol, bevorzugterweise Ethanol.

In einer 15. Ausführungsform des zweiten Aspektes, die auch eine Ausführungsform der sechsten, siebten, achten, neunten, zehnten, elften, zwölften und 13. Ausführungsform des zweiten Aspektes ist, und in einer 15. Ausführungsform des ersten Aspektes, die auch eine Ausführungsform der neunten, zehnten, elften, zwölften, 13., 14., 15. und 16. Ausführungsform des ersten Aspektes ist, macht das Lösemittel 3 bis 6 Gew.-% der wässrigen Lösung ausmacht, bevorzugterweise 5 bis 6 Gew.-% und bevorzugtererweise 5.5 Gew.-% der wässrigen Lösung aus.

In einer 16. Ausführungsform des zweiten Aspektes, die auch eine Ausführungsform der siebten, achten, neunten, zehnten, elften, zwölften, 13., 14. und 15. Ausführungsform des zweiten Aspektes ist, und in einer 18. Ausführungsform des ersten Aspektes, die auch eine Ausführungsform der zehnten, elften, zwölften, 13., 14., 15., 16., 17. und 18. Ausführungsform des ersten Aspektes ist, umfasst die wässrige Lösung eine alkalisch reagierende Verbindung, wobei die alkalisch reagierende Verbindung ausgewählt ist aus der Gruppe umfassend Pyrrophosphat und Ammoniak.

In einer 17. Ausführungsform des zweiten Aspektes, die auch eine Ausführungsform der 16. Ausführungsform des zweiten Aspektes ist, und in einer 20. Ausführungsform des ersten Aspektes, die auch eine Ausführungsform der 19. Ausführungsform des ersten Aspektes ist, ist die alkalisch reagierende Verbindung eine Kombination aus mindestens einer ersten alkalisch reagierenden Verbindung und einer zweiten alkalisch reagierenden Verbindung ist.

In einer 18. Ausführungsform des zweiten Aspektes, die auch eine Ausführungsform der 17. Ausführungsform des zweiten Aspektes ist, und in einer 21. Ausführungsform des ersten Aspektes, die auch eine Ausführungsform der 20. Ausführungsform des ersten Aspektes ist, ist die erste alkalisch reagierende Verbindung Pyrrophosphat und die zweite alkalisch reagierende Verbindung Ammoniak.

In einer 19. Ausführungsform des zweiten Aspektes, die auch ein Ausführungsform der 16., 17. und 18. Ausführungsform des zweiten Aspektes ist, und in einer 22. Ausführungsform des ersten Aspektes, die auch eine Ausführungsform der 19., 20. und 21. Ausführungsform des ersten Aspektes ist, ist Ammoniak eine Ammoniak-Lösung, bevorzugterweise eine 25 % Ammoniak-Lösung.

In einer 20. Ausführungsform des zweiten Aspektes, die auch eine Ausführungsform der 16., 17., 18. und 19. Ausführungsform des zweiten Aspektes ist, und in einer 23. Ausführungsform des ersten Aspektes, die auch eine Ausführungsform der 19., 20., 21. und 22. Ausführungsform des ersten Aspektes ist, ist Pyrrophosphat ausgewählt aus der Gruppe umfassend Tetranatriumpyrrophosphat und Tetrakaliumpyrrophoshphat.

In einer 21. Ausführungsform des zweiten Aspektes, die auch eine Ausführungsform der siebten, achten, neunten, zehnten, elften, zwölften, 13., 14., 15., 16., 17., 18., 19. und 20. Ausführungsform des zweiten Aspektes ist, und in einer 24. Ausführungsform des ersten Aspektes, die auch eine Ausführungsform der zehnten, elften, zwölften, 13., 14., 15., 16., 17., 18., 19., 20., 21., 22. und 23. Ausführungsform des ersten Aspektes ist, macht die alkalisch reagierende Verbindung 0,6 bis 0,8 Gew.-% der wässrigen Lösung, bevorzugterweise 0,7 Gew.-% der wässrigen Lösung aus.

In einer 22. Ausführungsform des zweiten Aspektes, die auch eine Ausführungsform der neunten, zehnten, elften, zwölften, 13., 14., 15., 16., 17., 18., 19., 20. und 21. Ausführungsform des zweiten Aspektes ist, und in einer 25. Ausführungsform des ersten Aspektes, die auch eine Ausführungsform der zwölften, 13., 14., 15., 16., 17., 18., 19., 20., 21., 22., 23. und 24. Ausführungsform des ersten Aspektes ist, führt das Tensid in Kontakt mit einer Verschmutzung dazu, dass von dem Schaum gebildeten Schaumlamellen gebrochen werden und/oder die Elastizität des Schaumes verringert wird.

In einer 23. Ausführungsform des zweiten Aspektes, die auch eine Ausführungsform der neunten, zehnten, elften, zwölften, 13., 14., 15., 16., 17., 18., 19., 20., 21. und 22. Ausführungsform des zweiten Aspektes ist, und in einer 26. Ausführungsform des ersten Aspektes, die auch eine Ausführungsform der zwölften, 13., 14., 15., 16., 17., 18., 19., 20., 21., 22., 23., 24. und 25. Ausführungsform des ersten Aspektes ist, ist das TensidC12-C15 Pareth-25-Sulfat, bevorzugterweise Elfan NS 252 und bevorzugterweise eine 28%ige Lösung davon, oder das Tensid ein Natrium-Laurylethersulfat C12-14, mit etwa 2 EO, bevorzugterweise Emal 228 D und bevorzugtererweise eine 28%ige Lösung davon.

In einer 24. Ausführungsform des zweiten Aspektes, die auch eine Ausführungsform der neunten, zehnten, elften, zwölften, 13., 14., 15., 16., 17., 18., 19., 20., 21., 22. und 23. Ausführungsform des zweiten Aspektes ist, und in einer 27. Ausführungsform des ersten Aspektes, die auch eine Ausführungsform der zwölften, 13., 14., 15., 16., 17., 18., 19., 20., 21., 22., 23., 24., 25. und 26. Ausführungsform des ersten Aspektes ist, macht das Tensid 0,001 bis 0,01 Gew.-% der wässrigen Lösung, bevorzugterwise 0,0025 Gew.-% bis 0,01 Gew.-% und bevorzugtererweise 0,005 Gew-% der wässrigen Lösung aus.

In einer 25. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23. und 24. Ausführungsform des zweiten Aspektes ist, und in einer 28. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26. und 27. Ausführungsform des ersten Aspektes ist, weist die wässrige Lösung einen pH-Wert > 7 auf, bevorzugterweise einen pH-Wert ≥ 7,5.

In einer 26. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24. und 25. Ausführungsform des zweiten Aspektes ist, und in einer 29. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26., 27. und 28. Ausführungsform des ersten Aspektes ist, steht die wässrige Lösung unter Druck steht.

In einer 27. Ausführungsform des zweiten Aspektes, die auch eine Ausführungsform der 26. Ausführungsform des zweiten Aspektes ist, und in einer 30. Ausführungsform des ersten Aspektes, die auch eine Ausführungsform der 29. Ausführungsform des ersten Aspektes ist, dient der Druck der Ausbildung des Schaumes.

In einer 28. Ausführungsform des zweiten Aspektes, die auch eine Ausführungsform der 26. und 27. Ausführungsform des zweiten Aspektes ist, und in einer 31. Ausführungsform des ersten Aspektes, die auch eine Ausführungsform der 29. und 30. Ausführungsform des ersten Aspektes ist, ist der Druck durch ein Treibmittel bedingt, wobei das Treibmittel bevorzugterweise ein solches ist, das geeignet aus der wässrigen Lösung einen Schaum auszubilden.

In einer 29. Ausführungsform des zweiten Aspektes, die auch eine Ausführungsform der 26. 27. und 28. Ausführungsform des zweiten Aspektes ist, und in einer 32. Ausführungsform des ersten Aspektes, die auch eine Ausführungsform der 29., 30. und 31. Ausführungsform des ersten Aspektes ist, ist das Treibmittel eine Mischung von Propan und Butan.

In einer 30. Ausführungsform des zweiten Aspektes, die auch eine Ausführungsform der 26. 27., 28. und 29. Ausführungsform des zweiten Aspektes ist, und in einer 33. Ausführungsform des ersten Aspektes, die auch eine Ausführungsform der 29., 30., 31. und 32. Ausführungsform des ersten Aspektes ist, beträgt der Druck 202,65 kPa bis 405,3 kPa, bevorzugterweise 273,578 kPa bis 354,638 kPa.

In einer 31. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24. 25., 26., 27., 28., 29. und 30. Ausführungsform des zweiten Aspektes ist, und in einer 34. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26., 27., 28., 29., 30., 31., 32. und 33. Ausführungsform des ersten Aspektes ist, weist die wässrige Lösung eine unter Druck stehende wässrige Lösung ist, wobei die unter Druck stehende Lösung die folgende Zusammensetzung auf:

| | | |
|---|---|---|
| - Wasser deionisiert: | 78,4 - 93,7 | Gew.-% |
| - Tetranatriumpyrrophoshphat | 0,02 - 0,3 | Gew.-% |
| - Elfan NS 252 28%ig | 0,002 - 0,1 | Gew.-% |
| - Butylglykol | 2,0 - 6,0 | Gew.-% |
| - Ethanol 641, 96%ig MEK vergällt | 1,0 - 4,0 | Gew.-% |
| - Ammoniak-Lösung 25 % | 0,3 - 1,0 | Gew.-% |
| - Duftstoffgemisch | 0,01 - 0,5 | Gew.-% |
| - Propan/Butan 3,5 bar | 3,0 - 10,0 | Gew.-%, |

wobei die Summe der Einzelbestandteile, insbesondere der vorstehend genannten Einzelbestandteil 100 Gew.-% ergibt.

In einer 32. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24. 25., 26., 27., 28., 29., 30. und 31. Ausführungsform des zweiten Aspektes ist, und in einer 35. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26., 27., 28., 29., 30., 31., 32., 33. und 34. Ausführungsform des ersten Aspektes ist, weist die wässrige Lösung eine unter Druck stehende wässrige Lösung ist, wobei die unter Druck stehende Lösung die folgende Zusammensetzung auf:

| | | |
|---|---|---|
| - Wasser deionisiert: | 86,290 | Gew.-% |
| - Tetranatriumpyrrophoshphat | 0,099 | Gew.-% |
| - Elfan NS 252 28%ig | 0,005 | Gew.-% |
| - Butylglykol | 3,945 | Gew.-% |
| - Ethanol 641, 96%ig MEK vergällt | 1,973 | Gew.-% |
| - Ammoniak-Lösung 25 % | 0,641 | Gew.-% |
| - Duftstoffgemisch | 0,047 | Gew.-% |
| - Propan/Butan 3,5 bar | 7,000 | Gew.-% |

In einer 33. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24. 25., 26., 27., 28., 29., 30., 31. und 32. Ausführungsform des zweiten Aspektes ist, und in einer 36. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26., 27., 28., 29., 30., 31., 32., 33., 34. und 35. Ausführungsform des ersten Aspektes ist, ist die Verschmutzung ausgewählt aus der Gruppe umfassend Verschmutzung mit Salz, Verschmutzung mit Kohlehydraten, Verschmutzung mit Proteinen, Verschmutzung mit Fetten, Verschmutzung mit Kalk, Verschmutzung mit Kalkseife, Verschmutzung mit Fruchtfleisch und Verschmutzung mit Leuchtstiftfarbe.

In einer 34. Ausführungsform des zweiten Aspektes, die auch eine Ausführungsform der 33. Ausführungsform des zweiten Aspektes ist, und in einer 37. Ausführungsform des ersten Aspektes, die auch eine Ausführungsform der 36. Ausführungsform des ersten Aspektes ist, umfasst die Verschmutzung Kohlehydraten eine Verschmutzung mit Stärke oder Zucker.

In einer 35. Ausführungsform des zweiten Aspektes, die auch eine Ausführungsform der 33. Ausführungsform des zweiten Aspektes ist, und in einer 38. Ausführungsform des ersten Aspektes, die auch eine Ausführungsform der 36. Ausführungsform des ersten Aspektes ist, umfasst Verschmutzung mit Fett Verschmutzung mit tierischem Fett oder pflanzlichem Fetts.

In einer 36. Ausführungsform des zweiten Aspektes, die auch eine Ausführungsform der 33. Ausführungsform des zweiten Aspektes ist, und in einer 39. Ausführungsform des ersten Aspektes, die auch eine Ausführungsform der 36. Ausführungsform des ersten Aspektes ist, umfasst Verschmutzung mit Salz Verschmutzung mit Kochsalz.

In einer 37. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24. 25., 26., 27., 28., 29., 30., 31., 32., 33., 34., 35. und 36. Ausführungsform des zweiten Aspektes ist, und in einer 40. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26., 27., 28., 29., 30., 31., 32., 33., 34., 35., 36., 37., 38. und 39. Ausführungsform des ersten Aspektes ist, ist die Verschmutzung eine Verschmutzung mit Protein, Fett, Salz, Zucker, Kalk und Stärke, bevorzugterweise ist die Verschmutzung eine Verschmutzung mit Protein, eine Verschmutzung mit Fett und/oder eine Verschmutzung mit Salz.

In einer 38. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24. 25., 26., 27., 28., 29., 30., 31., 32., 33., 34., 35., 36. und 37. Ausführungsform des zweiten Aspektes ist, und in einer 41. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26., 27., 28., 29., 30., 31., 32., 33., 34., 35., 36., 37., 38., 39. und 40. Ausführungsform des ersten Aspektes ist, besteht die Oberfläche aus einem Material, das ausgewählt ist aus der Gruppe umfassend Marmor, Keramik, Edelstahl, Kunststoff, Plexiglas und Glas.

In einer 39. Ausführungsform des zweiten Aspektes, die auch eine Ausführungsform der 38. Ausführungsform des zweiten Aspektes ist, und in einer 42. Ausführungsform des ersten Aspektes, die auch eine Ausführungsform der 41. Ausführungsform des ersten Aspektes ist, ist der Kunststoff Polyvinylchlorid (PVC).

In einer 40. Ausführungsform des zweiten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24. 25., 26., 27., 28., 29., 30., 31., 32., 33., 34., 35., 36., 37., 38. und 39. Ausführungsform des zweiten Aspektes ist, und in einer 43. Ausführungsform des ersten Aspektes, die auch eine Ausführungsform der ersten, zweiten, dritten, vierten, fünften, sechstem siebten, achten, neunten, zehnten, elften, zwölften, 13., 14., 15., 16., 17., 18., 19., 20., 21., 22., 23., 24., 25., 26., 27., 28., 29., 30., 31., 32., 33., 34., 35., 36., 37., 38., 39., 40., 41. und 42. Ausführungsform des ersten Aspektes ist, besteht die Oberfläche aus Marmor oder Keramik.

Es ist im Rahmen der vorliegenden Erfindung und damit eine weitere Ausführungsform einer jeglichen Ausführungsform eines jeglichen Aspektes der vorliegenden Erfindung, insbesondere des ersten und zweiten Aspektes, dass die wässrige Lösung, deren Schaum gemäß der vorliegenden Erfindung auf die Oberfläche aufgebracht wird, auf der eine Verschmutzung nachgewiesen werden soll, eine solche ist, die in der Lage ist, einen Schaum zu bilden, bevorzugterweise einen Schaum zu bilden, der in der Lage ist, nach Aufbringen auf eine Oberfläche eine Verschmutzung anzuzeigen, wobei die Verschmutzung dadurch angezeigt wird, dass der Schaum an dem Ort der Oberfläche zerfällt, auf dem die Verschmutzung vorliegt, bzw. der Schaum schneller an dem Ort der Oberfläche zerfällt, auf dem die Verschmutzung vorliegt, als an einem Ort der Oberfläche, auf dem keine Verschmutzung vorliegt. Alternative oder ergänzend ist der Schaum ein solcher, bei dem die gebildeten Schaumlamellen an dem Ort gebrochen werden, auf dem die Verschmutzung vorliegt und/oder die Elastizität des Schaumes, bevorzugterweise der Schaumlamellen, an dem Ort der Oberfläche verringert wird, auf dem die Verschmutzung vorliegt, bzw. das Brechen der gebildeten Schaumlamellen schneller erfolgt an dem Ort der Oberfläche, auf dem eine Verschmutzung vorliegt, als an einem Ort der Oberfläche, auf dem keine Verschmutzung vorliegt, und/oder die Verringerung der Elastizität des Schaumes, bevorzugterweise der Schaumlamellen, an dem Ort der Oberfläche, auf dem die Verschmutzung vorliegt, schneller erfolgt als an einem Ort der Oberfläche, auf dem keine Verschmutzung vorliegt. Es ist im Rahmen der vorliegenden Erfindung, dass die Formulierung, dass ein Ort einer oder der Oberfläche keine Verschmutzung aufweist auch einen Sachverhalt beschreibt, bei dem der Ort einer oder der Oberfläche eine Verschmutzung aufweist, wobei diese Verschmutzung jedoch verschieden ist von der Verschmutzung, die mittels des erfindungsgemäßen Verfahrens nachgewiesen werden soll.

Bevorzugterweise wird die Fähigkeit einer wässrigen Lösung einen Schaum auszubilden dadurch bedingt, dass die wässrige Lösung eine grenzflächenaktive Substanz, bevorzugterweise ein Tensid, enthält. In einer Ausführungsform ist vorgesehen, dass die grenzflächenaktive Substanz eine solche ist, wie sie hierin beschrieben ist. In einer weiteren Ausführungsform ist vorgesehen, dass das Tensid ein solches ist, wie es hierin beschrieben ist.

Es ist im Rahmen der vorliegenden Erfindung und damit eine weitere Ausführungsform einer jeglichen Ausführungsform eines jeglichen Aspektes der vorliegenden Erfindung, insbesondere des ersten und zweiten Aspektes, dass der Schaum der wässrigen Lösung auf der Oberfläche, auf der eine Verschmutzung erfindungsgemäß nachgewiesen werden soll, ein feuchter Schaum ist, mithin der Flüssigkeitsgehalt des Schaumes ≥ 1 Vol.-% beträgt. Bevorzugterweise beträgt der Flüssigkeitsgehalt des Schaumes 2 bis 80 Vol.-%, bevorzugterweise über die Höhe des Schaums. Bevorzugtererweise beträgt der Flüssigkeitsgehalt des Schaumes 5 bis 35 Vol.-%, bevorzugterweise über die Höhe des Schaums.

Es ist im Rahmen der vorliegenden Erfindung und damit eine weitere Ausführungsform einer jeglichen Ausführungsform eines jeglichen Aspektes der vorliegenden Erfindung, insbesondere des ersten und zweiten Aspektes, dass der Schaum ein Schaum eines Reinigungsmittels, bevorzugterweise eines Glasreinigungsmittels ist.

Die der vorliegenden Erfindung zu Grunde liegenden Aufgaben werden in einem dritten Aspekt, der auch die erste Ausführungsform des dritten Aspektes ist, gelöst durch die Verwendung einer wässrigen Lösung wie im Zusammenhang mit dem ersten und zweiten Aspekt der vorliegenden Erfindung in all ihren Ausführungsformen definiert, zum Nachweisen einer Verschmutzung auf einer Oberfläche.

Die der vorliegenden Erfindung zu Grunde liegenden Aufgaben werden in einem vierten Aspekt, der auch die erste Ausführungsform des vierten Aspektes ist, gelöst durch die Verwendung eines Schaumes zum Nachweisen einer Verschmutzung auf einer Oberfläche, wobei der Schaum hergestellt ist auf der Grundlage der wässrigen Lösung wie im Zusammenhang mit dem ersten und zweiten Aspekt der vorliegenden Erfindung in all ihren Ausführungsformen definiert.

In einer zweiten Ausführungsform des dritten Aspektes, die auch eine Ausführungsform der ersten Ausführungsform des dritten Aspektes ist, und in einer zweiten Ausführungsform des vierten Aspektes, die auch eine Ausführungsform der ersten Ausführungsform des vierten Aspektes ist, ist die Oberfläche eine solche ist, wie sie im Zusammenhang mit dem ersten und zweiten Aspekt der vorliegenden Erfindung in all ihren Ausführungsformen definiert ist.

Die der vorliegenden Erfindung zu Grunde liegenden Aufgaben werden in einem fünften Aspekt, der auch die erste Ausführungsform des fünften Aspektes ist, gelöst durch die Verwendung eines Sprühkopfes zum Erzeugen eines Schaumes aus einer wässrigen Lösung, wie sie im Zusammenhang mit dem ersten und zweiten Aspekt der vorliegenden Erfindung in all ihren Ausführungsformen definiert ist, wobei der Schaum zum Nachweisen einer Verschmutzung auf einer Oberfläche verwendet wird.

Die vorliegenden Erfinder haben überraschenderweise gefunden, dass es möglich ist, eine Verschmutzung auf einer Oberfläche, insbesondere eine Verschmutzung auf einer Oberfläche, die für das unbewaffnete menschliche Auge nicht sichtbar ist, durch das Aufbringen eines Schaumes einer wässrigen Lösung nachzuweisen, wobei der Schaum ein solcher ist, dessen Schaumlamellen auf einer Oberfläche, die eine Verschmutzung aufweist, gebrochen werden und/oder der Schaum ein solcher ist, dessen Elastizität auf einer Oberfläche, die eine Verschmutzung aufweist, verringert wird. Insoweit betrifft die vorliegende Erfindung auch die Verwendung eines aus einer wässrigen Lösung hergestellten Schaumes zum Nachwiesen einer Verschmutzung auf einer Oberfläche, wobei die Schaumlamellen des Schaumes bei Kontakt mit einer Verschmutzung auf der Oberfläche gebrochen werden und/oder wobei die Elastizität des Schaumes bei Kontakt mit einer Verschmutzung auf der Oberfläche verringert wird.

In einer Ausführungsform erfolgt das Brechen der Schaumlamellen an der die Verschmutzung aufweisenden Stelle der Oberfläche stärker und/oder schneller als an einer Stelle der Oberfläche, die keine oder eine weniger ausgeprägte Verschmutzung aufweist. Gleiches gilt auch für die Verringerung der Elastizität des Schaumes, die an der Stelle der Oberfläche, die eine Verschmutzung trägt, stärker und/oder schneller verringert wird, als an einer Stelle der Oberfläche, die keine oder eine geringere Verschmutzung trägt.

Verfahren zum Bestimmen, ob Schaumlamellen eines Schaumes gebrochen sind oder werden, einschließlich des zeitlichen Verlaufes dieses Brechens, sind dem Fachmann bekannt und bspw. beschrieben in "Schaumbroschüre TEGEWA Arbeitsgruppe "Grenzflächenaktive Substanzen"", Version 2007 und den darin angeführten Deutschen Industrienormen DIN EN 12728 und DIN EN 14371. Es ist im Rahmen der vorliegenden Erfindung, dass das Brechen der Schaumlamellen mittels des unbewaffneten Auges festgestellt oder beobachtet werden kann. Es ist auch im Rahmen der vorliegenden Erfindung, dass das Brechen der Schaumlamellen innerhalb eines Zeitrahmens von 1 bis 200 sec, bevorzugterweise von 1 bis 50 sec und bevorzugtererweise 2 bis 20 sec erfolgt und/oder festgestellt oder beobachtet wird.

Verfahren zum Bestimmen, ob die Elastizität eines Schaumes verringert ist oder verringert wird, einschließlich des zeitlichen Verlaufes einer derartigen Verringerung der Elastizität, sind dem Fachmann bekannt und bspw. beschrieben in Hans-Dieter Dörfler, "Grenzflächen und Kolloidchemie", VCH Verlagsgesellschaft mbH, 1994, Seiten 195- 222 und Fig, 7.10 im Besonderen. Es ist im Rahmen der vorliegenden Erfindung, dass die Verringerung der Elastizität des Schaumes und der Schaumlamellen im Besonderen mittels des unbewaffneten Auges festgestellt oder beobachtet werden kann. Es ist auch im Rahmen der vorliegenden Erfindung, dass die Verringerung der Elastizität des Schaumes und der Schaumlamellen im Besonderen innerhalb eines Zeitrahmens von 1 bis 200 sec, bevorzugterweise von 1 bis 50 sec und bevorzugtererweise 2 bis 20 sec erfolgt und/oder festgestellt oder beobachtet wird.

Faktoren, die die Elastizität von Schäumen und Schaumlamellen beschreiben, sowie Faktoren zu deren Bestimmung, sind bspw. beschrieben in Denis Weaire und Stefan Hutzler, "The Physics of Foam", Oxford University Press, 2001, oder in Applikationsbericht 246d der Firma KRÜSS GmbH, Hamburg oder dem Applikationsbericht 267d der Firma KRÜSS GmbH, Hamburg. Ein derartiger Faktor, der diesbezüglich in einer bevorzugten Ausführungsform herangezogen werden kann, ist das Elastizitätmodul E', dessen Bestimmung und Auswahl, so dass die für die Durchführung der erfindungsgemäßen Verfahren erforderlichen Schaumeigenschaften erzielt werden, im Rahmen eines routinemäßigem Vorgehens von dem Fachmann auf dem Gebiet vorgenommen werden kann.

In einer bevorzugten Ausführungsform ist der Schaum ein Polyederschaum, wie er sich nur in Gegenwart eines grenzflächenaktiven Stoffes wie eines Tensids ausbildet (siehe hierzu Mollet H und Grubenmann A, "Formulierungstechnik: Emulsionen, Suspensionen, Feste Formen, Wiley-VCH Verlag GmbH, 2000, Kapitel 4). Insoweit ist in einer bevorzugten Ausführungsform die den Schaum ausbildende wässrige Lösung eine solche, die in der Lage ist, einen Polyederschaum auszubilden. In einer alternativen Ausführungsform ist der Schaum ein Kugelschaum. Im Zusammenhang mit dieser alternativen Ausführungsform ist die den Schaum ausbildenden wässrige Lösung eine solche, die in der Lage ist einen Polyederschaum auszubilden.

Ein Verfahren zur Schaumbestimmung und der Bestimmung der Merkmale eines Schaumes sind bspw. auch beschrieben in Wilmsmann H (1964), "Schaumbestimmung von Tensiden mit einer Reibschaummethode." Fette, Seifen, Anstrichm., 66: 955-961.

Wie hierin bevorzugt verwendet bezeichnet der Begriff des Schaumes eine thermodynamisch instabile Dispersion von Luft oder einem Gas oder einem Gasgemisch in Wasser, wobei die Instabilität sich aus dem parallel Ablauf der folgenden drei Mechanismen ergibt: Drainage, Ostwald-Reifung und Koaleszenz. Bei der Anwesenheit von oberflächenaktiven Substanzen oder grenzflächenaktive Additiven und Tensiden im Besonderen, beobachtet man eine kinetische Stabilisierung durch die Ausbildung von Schaumlamellen (siehe Tropsch J. und Bauer F., SOFW-Journal, 139, 4-2013, Seiten 61-68), denen im Rahmen der vorliegenden Erfindung eine erhebliche Bedeutung zukommt. Im Lichte der vorliegenden Offenbarung kann der Fachmann im Rahmen von Routineverfahren die Zusammensetzung derartiger Schäume bzw. die sie ausbildenden wässrigen Lösungen ermitteln.

Als Lösemittel kann grundsätzlich ein jedes Lösemittel verwendet werden, welches in der Lage ist, sich im Wasser zu lösen und die Schaumlamellen nicht angreift. In einer bevorzugten Ausführungsform ist eine lineare Verbindung wie bspw. Butylglycol bevorzugt. Als besonders geeignet hat sich Butylglykol erwiesen. Lösemittel, die in dem erfindungsgemäßen Verfahren ein zumindest ähnliches Verhalten zeigen, können ebenfalls verwendet werden.

Als Tensid kann grundsätzlich ein jedes Tensid verwendet werden, welches in der Lage ist, einen Schaum auszubilden, der die Durchführung des erfindungsgemäßen Verfahrens erlaubt. Tenside sind bspw. beschrieben in Günter Wagner, "Waschmittel - Chemie, Umwelt, Nachhaltigkeit", 4. Auflage, Wiley-VCH; "Die Tenside", Hrsg. Dr. Kurt Kosswig und Dr. Helmut Stache, Carl Hanser Verlag München Wien, 1993 und Helmut Stache, "Tensid-Taschenbuch", Carl Hanser Verlag München Wien, 1979. Eine Übersicht über verschiedene, im Rahmen des erfindungsgemäßen Verfahrens grundsätzlich einsetzbare Tenside findet sich auch in "Schaumbroschüre TEGEWA Arbeitsgruppe "Grenzflächenaktive Substanzen"", Version 2007. Grundsätzlich geeignet sind nichtionische Tenside, ionische (anionisch, kationisch) Tenside und amphotere Tenside. Beispiele für nichtionische Tenside sind Ethoxylate wie bspw. C₁₀-Guerbet-Alkohol-Ethoxylate mit 3-14 Mol Ethoxylat (EO), wie bspw. Lutensol^{®} XP, Guerbet-Alkohol-Ethoxylate mit 4-14 Mol Ethoxylat (EO), wie bspw. Lutensol^{®} XL, Guerbet-Alkohol-Ethoxylate mit 4-6 Mol Ethoxylat (EO), wie bspw. Lutensol^{®} XA, Guerbet-Alkohol-Ethoxylate mit 3-14 Mol Ethoxylat (EO), wie bspw. Lutensol^{®} ON, C₁₃C₁₅-Oxo-Alkohol-Ethoxylate mit 3-30 Mol Ethoxylat (EO), wie bspw. Lutensol^{®} AO, C₁₂C₁₄-Fettalkohol -Ethoxylate mit 3-9 Mol Alkoxylat (EO), wie bspw. Lutensol^{®} A..N oder Dehydrol^{®} LS, C₁₃-Oxo - Alkohol-Alkoxylate mit 3-20 Mol Ethoxylat (EO), wie bspw. Lutensol^{®} TO, C₁₆C₁₈-Fettalkohol-Ethoxylate mit 11-80 Mol Ethoxylat (EO), wie bspw. Lutensol^{®} AT oder Dehydrol^{®} TA, C₁₂C₁₈-Fettalkohol-Ethoxylate mit 4-10 Mol Ethoxylat (EO), wie bspw. Dehydol^{®} LT, C₁₀C₁₈-Fettalkohol-Ethoxylate mit 4-10 Mol Ethoxylat (EO), wie bspw. Dehydol^{®} LT, C₁₀C₁₈-Alkohol-Ethoxylate mit 5-7 Mol Ethoxylat (EO), wie bspw. Lutensol^{®} M, oder C₈C₁₄-Alkylpolyglucoside wie bspw. Glucopon^{®}. Beispiel für ionische Tenside sind C₁₂C₁₈-Fettalkoholsulfate, wie bspw. Sulfopon^{®}, C₁₂C₁₈-Fettalkoholethersulfate, wie bspw. Texapon^{®} und quartäre C₁₂C₁₈-Fettsäuretriethanolammonium-Salze wie bspw. Dehyquart^{®}. Beispiel für amphotere Tenside sind Betaine (Acyl-N⁺(Me)₂-COO), wie bspw. Dehyton^{®} AB30, Dehyton^{®} K oder Dehyton^{®} PK, Amphoacetate oder Amphopropionate (Acyl-Alkyl-N-COO) wie bspw. Dehyton^{®} DC, Dehyton^{®} MC oder Dehyton^{®} SLP, und Aminoxide (Alkyl-N⁺(Me)₂-O), wie bspw. Dehyton^{®} PL oder Dehyton^{®} P CAW.

Als besonders geeignet hat sich Natrium-Laurylethersulfat C12-14, mit etwa 2 EO (Ethylenoxid-Einheiten), bevorzugterweise aus nativen Grundstoffen, erwiesen. Derartige Natrium-Laurylethersulfat C12-14 werden unter den Handelsnamen Emal 228 D kommerziell erhältlich ist. Ein weiteres Tensid, welches sich als besonders geeignet erwiesen hat, ist Natrium C12-15 Pareth-25 Sulfate, welches unter dem Handelsnamen Elfan NS 252 kommerziell erhältlich ist. Weitere derartige Tenside sind unter den Handlesnamen Empicol ESC 3, Neosol CD 230 DASulforokanol L225/1 oder Texapon NSO kommerziell erhältlich. Tenside, die in dem erfindungsgemäßen Verfahren ein zumindest ähnliches Verhalten zeigen, können ebenfalls verwendet werden.

Als Treibmittel wird typischerweise ein in der wässrigen Lösung bzw. wässrigen Phase unlösliches Gas oder Gasgemisch verwendet, was die Ostwald-Reifung verhindert. Ein für die vorliegende Erfindung bevorzugtes Gasgemisch ist ein Gemisch aus Propan und Butan, welches optional noch einen Gehalt an Isobutan enthalten kann. Derartige Mischungen sind bspw. unter der Bezeichnung Aeron^{®} 2,7 bar (mit einer Zusammensetzung aus n-Butan 76,0 ± 3,0 Gew.-% und Propan 21,0 ± 3,0 Gew.-% oder aus n-Butan 48,0 ± 4,0 Gew.-%, Isobutan 34,0 ± 4,0 Gew.-% und Propan 18,0 ± 3,0 Gew.-%) oder Aeron^{®} 3,7 bar (mit einer Zusammensetzung aus n-Butan 63,0 ± 3,0 Gew.-% und Propan 35,0 ± 3,0 Gew.-% oder aus n-Butan 30,0 ± 3,0 Gew.-%, Isobutan 40,0 ± 3,0 Gew.-% und Propan 30,0 ± 3,0 Gew.-%) von Scharr CPC GmbH, Krefeld, Deutschland, erhältlich. Alternative kann als Treibmittel DME (Dimethylether) verwendet werden.

Der Sprühkopf zur Erzeugung des erfindungsgemäß zu verwendenden Schaumes kann aus einer Reihe von im Stand der Technik bekannten Sprühköpfen ausgewählt werden. Dabei ist erforderlich, dass das System zur Erzeugung von Schaum bestehend aus Sprühkopf, Ventil, Treibgas und Druck die Ausbildung von Schaumlamellen erlaubt. Ein derartiger Schaumaufbau mit der Ausbildung von Schaumlamellen erfolgt in der Regel nicht bei Verwendung einfacher Handsprühpistolen mit Luft als "Treibgas", wobei typischerweise lediglich ein Maximaldruck von 0,35 MPa erzeugt wird. Bei Verwendung von Sprühköpfen mit Treibgas ist bevorzugt, dass eine ausreichende Verwirbelung erfolgt und eine ausreichende Menge des den Schaum ausbildenden Fluids bereitgestellt wird. Im Rahmen des erfindungsgemäßen Verfahrens ist bevorzugt, dass der auf die Oberfläche aufgebrachte Schaum ein geschlossener Schaumfilm ist. Bevorzugterweise weist der geschlossene Schaumfilm eine Höhe von etwa 2 bis etwa 6 mm auf.

Ein besonders bevorzugter Sprühkopf ist der Sprühkopf Lindal 63/21 Wirbel 0,18 wie er von LINDAL Dispenser GmbH kommerziell erhältlich ist, in Verbindung mit dem Ventil Lindal 63/15 bei einem Druck von 3,5 bar unter Verwendung eines Propan/Butan-Gemisches als Treibgas. Alternative kann der Sprühkopf Lindal 63/25 ST 330020PP, kommerziell erhältlich von LINDAL Dispenser GmbH, mit Ventil Koinor 63/02 bei 2,7 und 3,5 bar und Lindal 61/09 ST 330018PP, kommerziell erhältlich von LINDAL Dispenser GmbH mit Ventil Koinor 63/02 mit 2,7 und 3,5 bar, jeweils unter Verwendung eines Propan/Butan-Gemisches als Treibgas verwendet werden.

Die Auswahl des Ventils ebenso wie der Druck des Treibmittels zur Erzeugung des erfindungsgemäß zu verwendenden Schaumes kann im Rahmen von Routinemaßnahmen bestimmt werden.

Die vorliegenden Erfinder haben überraschender Weise gefunden, dass die erfindungsgemäß zu verwendende wässrige Lösung zumindest eine der folgenden Verbindungen enthalten sollte: ein Lösemittel, eine alkalisch reagierende Verbindung und ein Tensid. Bevorzugterweise sind zumindest zwei dieser Verbindungen in der zu erfindungsgemäß zu verwendenden wässrigen Lösung enthalten. Das Fehlen einer dieser drei Verbindungen führt typischerweise zu einer Verringerung der Leistungsfähigkeit des erfindungsgemäßen Verfahrens, wobei jedoch auch in diesem Fall für bestimmte Verschmutzungen und bestimmte Oberflächen noch ein Nachweis einer Verschmutzung möglich ist.

Neben den vorstehenden Bestandteilen kann die erfindungsgemäß zu verwendende wässrige Lösung auch einen oder mehrere Duftstoffe wie bspw. ein Parfüm enthalten.

Das erfindungsgemäße Verfahren eignet sich besonders zum Nachweisen von Verschmutzungen auf einer der folgenden Oberflächen: Marmor, Keramik wie bspw. Wandfliese, Edelstahl und Kunststoff, insbesondere Polyvinylchlorid (PVC), Acrylglas und Glas, insbesondere glasierte Wandfliese. Die für das erfindungsgemäße Verfahren besten Oberflächen stellen dabei die aus Marmor und Keramik wie bspw. Wandfliese dar, gefolgt von solchen aus Edelstahl und Kunststoff, und schließlich solchen aus Acrylglas wie Plexiglas und Glas.

Das erfindungsgemäße Verfahren eignet sich besonders zum Nachweisen von Verschmutzung mit anorganischen Verbindungen uns insbesondere anorganischen Salzen, Verschmutzung mit Kohlehydraten, Verschmutzung mit Proteinen, Verschmutzung mit Fetten, Verschmutzung mit Kalk, Verschmutzung mit Kalkseife, Verschmutzung mit Fruchtfleisch und Verschmutzung mit Leuchtstiftfarbe. Diejenigen Verschmutzungen, die mit dem erfindungsgemäßen Verfahren besonders gut nachweisbaren Verschmutzungen sind dabei Verschmutzungen von Protein, Fett und Salz, gefolgt von Verschmutzungen mit Zucker und Verschmutzungen mit Stärke. Es wird von den Fachleuten auf dem Gebiet verstanden werden, dass auch Mischformen von Verschmutzungen mit dem erfindungsgemäßen Verfahren nachgewiesen werden können. Mischformen von Verschmutzungen sind dabei solche Verschmutzungen, die mindestens eine der hierin offenbarten Verschmutzungsform und eine weitere Verschmutzung umfass, wobei die weitere Verschmutzung eine der hierin offenbarten Verschmutzungsformen sein kann.

Es wird von den Fachleuten auf dem Gebiet anerkannt werden, dass die im Zusammenhang mit dem erfindungsgemäßen Verfahren offenbarten Merkmale der wässrigen Lösung und des Schaumes auch Merkmale der weiteren Aspekte der vorliegenden Erfindung sind und insbesondere Merkmale der erfindungsgemäßen Verwendung einer wässrigen Lösung zum Nachweisen einer Verschmutzung auf einer Oberfläche, der erfindungsgemäßen Verwendung eines Schaumes zum Nachweisen einer Verschmutzung auf einer Oberfläche, wobei der Schaum hergestellt ist auf der Grundlage der wässrigen Lösung, und der erfindungsgemäßen Verwendung eines Sprühkopfes zum Erzeugen eines Schaumes aus einer wässrigen Lösung, wobei der Schaum zum Nachweisen einer Verschmutzung auf einer Oberfläche verwendet wird, sind.

Die vorliegende Erfindung wird im Folgenden an Hand der beigefügten Zeichnungen und Beispiele weiter erläutert werden, aus denen sich weitere Merkmale, Ausführungsformen und Vorteile der Erfindung ergeben.

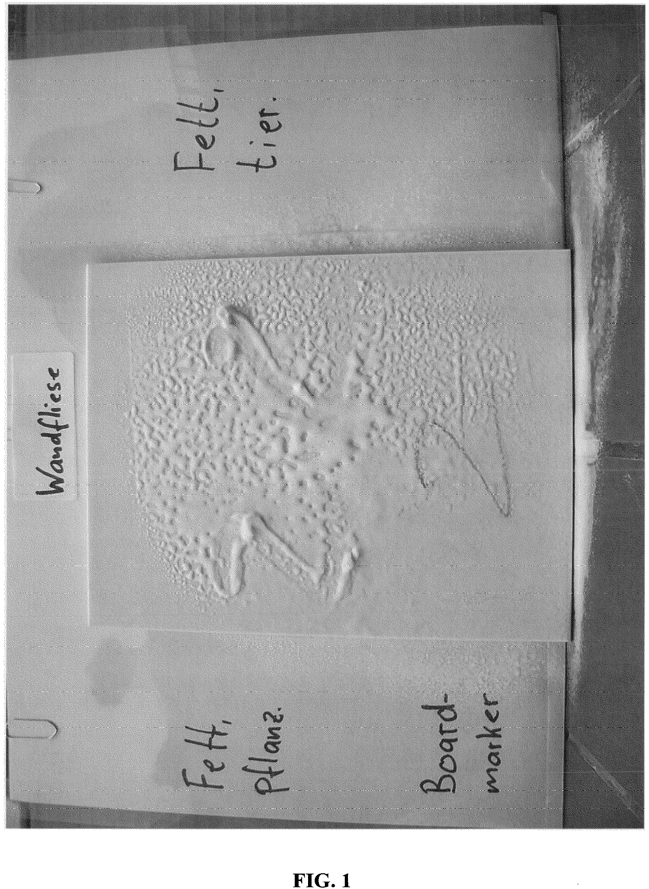

Dabei zeigt
Fig. 1 die Wirkung des erfindungsgemäßen Verfahrens unter Verwendung der Zusammensetzung KS 40-1a zum Nachweisen von tierischem Fett, pflanzlichem Fett sowie Boardmarker auf einer keramischen Oberfläche, genauer einer Wandfliese;

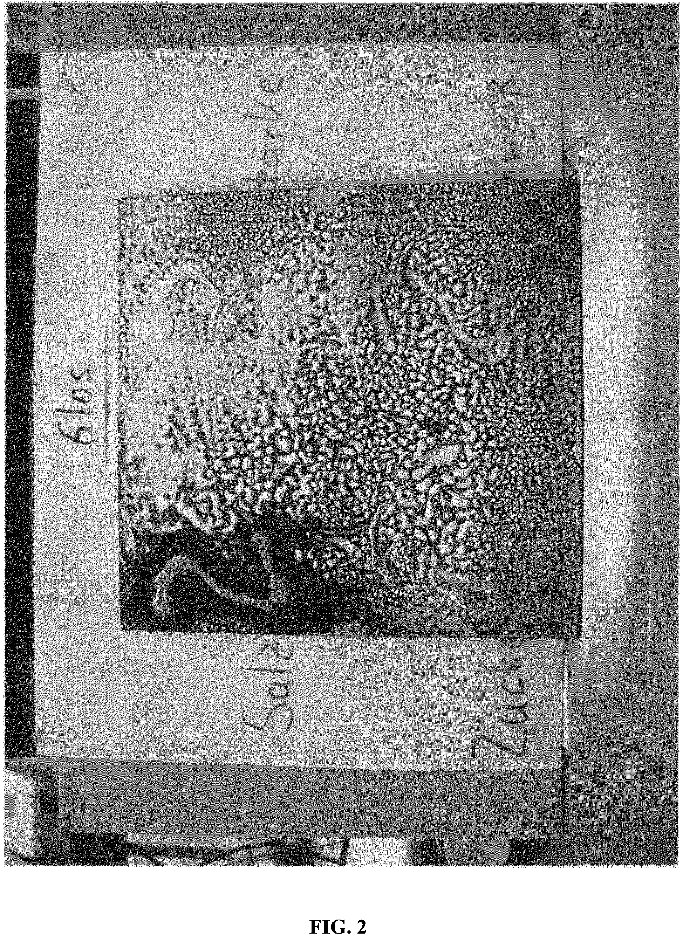

Fig. 2 die Wirkung des erfindungsgemäßen Verfahrens unter Verwendung der Zusammensetzung KS 40-1a zum Nachweisen von Salz, Zucker, Stärke und Eiweiß auf einer Glasoberfläche;

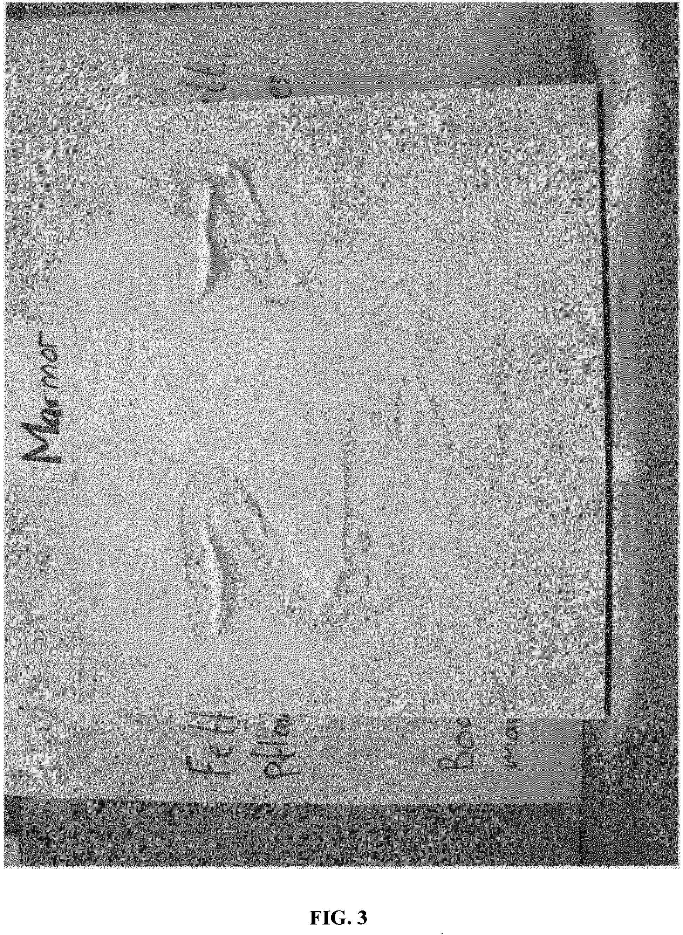

Fig. 3 die Wirkung des erfindungsgemäßen Verfahrens unter Verwendung der Zusammensetzung KS 40-1a zum Nachweisen von pflanzlichem Fell, tierischem Fett und Boardmarker auf einer Marmoroberfläche;
Fig. 4 eine Messanordnung zur Bestimmung von Schaumeigenschaften;
Fig. 5 das Mess- und Auswerteprinzip zur Bestimmung von Schaumeigenschaften bei Verwendung einer Messanordnung wie in Fig. 4 dargestellt; und
Fig. 6 ein Diagramm, das die Schaumhöhe als Funktion der Zeit darstellt.

### Beispiel 1: Material und Methoden

### Verschmutzungsformen

Als Beispiel für verschiedenen Formen der Verschmutzung wurde die folgenden Präparate hergestellt und auf die jeweiligen Oberflächen aufgebracht und eine Stunde bei ca. 60 °C getrocknet, wobei die Verschmutzungen somit wasserfrei auf den Oberflächen vorliegen.
- Stärkelösung für Verschmutzung mit Stärke: Stärke, löslich für Analyse, kommerziell erhältlich von Riedel-De-Haen AG.
- Glucoselösung für Verschmutzung mit Zucker (gewonnen aus Zuckerrübe)
- Kochsalzlösung für Verschmutzung mit Salz: Speisesalz.
- Ei für Verschmutzung mit Protein: Eiweiß ohne Eigelb
- Tierisches Fett: Deutsche Markenbutter, 82% Fett
- Pflanzliches Fett: Pflanzen Margarine Eiweiß 0%, Kohlenhydrate 0%, Zucker 0%, Fett 80% davon gesättigte Fettsäuren 26%, einfach ungesättige Fettsäuren 38%, mehrfach ungesättigte Fettsäuren 16%, Cholesterin 1,5mg, Ballaststoffe 0g, Natrium 0,08g, Vitamin A 900µg, Vitamin D 2,5µg, Vitamin E 24mg
- Kalk: Calcium Carbonat Ph. Eur., USP, BP, gefällt 98,5-100,5% von Carl Roth GmbH
- Kalkseife: Calciumstearat C16-C18, Ceasit I, Baerlocher GmbH
- Fruchtfleisch: Apfel

Zusammensetzung der als Grund- oder Ausgangslösung KS 40-1a verwendeten wässrigen Lösung, die in einem Druckgefäß bereitgestellt wurde:

| | | |
|---|---|---|
| - Wasser deionisiert: | 86,290 | Gew.-% |
| - Tetranatriumpyrrophoshphat | 0,099 | Gew.-% |
| - Elfan NS 252 28%ig | 0,005 | Gew.-% |
| - Butylglykol | 3,945 | Gew.-% |
| - Ethanol 641, 96%ig mit 1% MEK vergällt | 1,973 | Gew.-% |
| - Ammoniak-Lösung 25 % | 0,641 | Gew.-% |
| - Duftstoffgemisch | 0,047 | Gew.-% |
| - Propan/Butan 3,5 bar | 7,000 | Gew.-% |

Soweit im Folgenden auf Testlösungen verwiesen wird, bezeichnet der Buchstabe "a" das Vorhandensein von Parfüm, wohingegen der Buchstage "b" das Nichtvorhandensein von Parfüm in der jeweiligen Testlösung anzeigt.

Soweit im Folgenden Testlösungen und Zusammensetzungen beschrieben werden, beziehen sich die Angaben auf Gewichtsmengen bzw. Gewichts-%.

Der Schaum wurde mittels eines Sprühkopfes "Lindal 63/21, Wirbel 0,18", Ventil Lindal 63/15, Druck 3,5 bar auf der Grundlage der vorstehenden Grundlösung hergestellt und aus einer Entfernung von ca. 20 cm auf eine senkrecht stehend Oberfläche gesprüht, wobei die Oberfläche aus dem jeweils angegebenen Material bestand und ein Teil der Oberfläche die jeweils angegebene Verschmutzung aufwies.

### Beispiel 2: Nachweis von Verschmutzung auf verschieden Oberflächen

Der Nachweis von verschiedenen Formen von Verschmutzungen auf verschiedenen Oberflächen unter Verwendung der Grundlösung wurde getestet. Die Ergebnisse sind in der folgenden Tabelle zusammengefasst, wobei "Ja" bedeutet, dass die Verschmutzung nachgewiesen werden konnte, "Nein", dass die Verschmutzung nicht nachgewiesen werden konnte, und "(Ja)", dass der Befund unklar war. Der Nachweis der Verschmutzung erfolgte durch Feststellen, ob der Schaum an der die Verschmutzung tragenden Stelle der Oberfläche schneller zerfiel als an einer Stelle der Oberfläche, die keine Verschmutzung trug.

**Tabelle 1:**

| Untergrund / Verschmutzung | Salz | Zucker | Stärke | Eiweiß | Fett, pflanzlich | Fett, tierisch | Farbe (Board Marker) | Kalkseife | Kalk | Frucht (Apfel) | Sand |
|---|---|---|---|---|---|---|---|---|---|---|---|
| Edelstahl | Ja | Ja | Nein | Ja | Ja | Ja | Ja | Ja | Ja | Nein | Nein |
| Wandfliese | Ja | Ja | Ja | Ja | Ja | Ja | Ja | Ja | Ja | Nein | Nein |
| PVC | Ja | Ja | Nein | Ja | Ja | Ja | Nein | Ja | Ja | Nein | Nein |
| Holz unbehandelt | Ja | Ja | Nein | Ja | Ja | Ja | Ja | Ja | Ja | Nein | Ja |
| Glas (glasierte Fliese) | Ja | Nein | Nein | Ja | Ja | Ja | Ja | Ja | Ja | Nein | Nein |
| Plexiglas | Ja | Ja | Nein | Ja | Ja | Ja | Ja | Ja | Ja | Ja | Ja |
| Kunststoff | Ja | Ja | Nein | Ja | Ja | Ja | Ja | Ja | Ja | Nein | Nein |
| Marmor | Ja | Ja | Ja | Ja | Ja | Ja | Nein | Ja | Ja | Ja | Nein |
| Bodenfliese strukturiert, nicht glasiert (=Steinfliese) | Ja | Ja | Nein | Ja | Ja | Ja | Ja | Ja | Nein | Ja | Ja |

### Beispiel 3: Einfluss verschiedener Tenside auf die Eignung der Grundlösung zum Nachweisen von Verschmutzungen auf verschieden Oberflächen

Der Einfluss verschiedener Tenside auf die Eignung der Grundlösung zum Nachweisen von Verschmutzungen auf verschiedenen Oberflächen wurde getestet.

Konkret wurde das Tensid Elfan NS 252 durch das Tensid Emal 228 (Vergleich KS 40-1a mit KS 40-3a) ersetzt, wobei in einem Fall das Parfum enthalten war (Testlösung "KS 40-3a") und in einem anderen Fall nicht enthalten war ("Testlösung "KS 40-3b"). Elfan NS 252 ist Natrium C12-15 Pareth-25 Sulfat; Emal 228 ist Natrium Laureth Sulfat C12-14 2 EO. Die Ergebnisse sind in der folgenden Tabelle zusammengefasst, wobei "Ja" bedeutet, dass die Verschmutzung nachgewiesen werden konnte, "Nein", dass die Verschmutzung nicht nachgewiesen werden konnte, und "(Ja)", dass der Befund unklar war. Der Nachweis der Verschmutzung erfolgte durch Feststellen, ob der Schaum an der die Verschmutzung tragenden Stelle der Oberfläche schneller zerfiel als an einer Stelle der Oberfläche, die keine Verschmutzung trug.

**Tabelle 2:**

| | **Edelstahl** | **Wandfliese** | **PVC** | **Glas** | **Plexiglas** | **Marmor** |
|---|---|---|---|---|---|---|
| **KS 40-1a** | Sprühkopf Lind 63/21 original, Wirbel 0,18 | | | | | |
| Zucker | ja | ja | ja | nein | ja | ja |
| Eiweiß | ja | ja | ja | ja | ja | ja |
| Fett, pfl. | ja | ja | ja | ja | ja | ja |
| Salz | ja | ja | ja | ja | ja | ja |
| Stärke | nein | ja | nein | nein | nein | ja |
| Kalk | ja | (ja) | ja | (ja) | (ja) | (ja) |
| | | | | | | |

| **KS 40-3a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | (ja) | nein | nein | nein | ja | nein |
| Eiweiß | ja | ja | nein | ja | ja | ja |
| Fett, pfl. | ja | ja | ja | nein | ja | ja |
| Salz | ja | ja | ja | ja | ja | nein |
| Stärke | nein | nein | nein | ja | ja | nein |
| Kalk | (ja) | (ja) | (ja) | (ja) | (ja) | (ja) |

| **KS 40-3b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | ja | nein | (ja) | ja |
| Eiweiß | ja | ja | ja | ja | ja | ja |
| Fett, pfl. | ja | nein | nein | nein | nein | ja |
| Salz | ja | ja | ja | ja | ja | ja |
| Stärke | (ja) | (ja) | ja | (ja) | ia | nein |
| Kalk | (ja) | (ja) | nein | (ja) | (ja) | (ja) |

Wie aus der Tabelle ersichtlich, war der Austausch des Tensids praktisch ohne Einfluss.

### Beispiel 4: Einfluss verschiedener alkalisch reagierende Verbindungen auf die Eignung der Grundlösung zum Nachweisen von Verschmutzungen auf verschieden Oberflächen

Der Nachweis des Einflusses verschiedener alkalisch reagierende Verbindungen auf die Eignung der Grundlösung zum Nachweisen von Verschmutzungen auf verschieden Oberflächen wurde getestet. Die Ergebnisse sind in der folgenden Tabelle zusammengefasst, wobei "Ja" bedeutet, dass die Verschmutzung nachgewiesen werden konnte, "Nein", dass die Verschmutzung nicht nachgewiesen werden konnte, und "(Ja)", dass der Befund unklar war. Der Nachweis der Verschmutzung erfolgte durch Feststellen, ob der Schaum an der die Verschmutzung tragenden Stelle der Oberfläche schneller zerfiel als an einer Stelle der Oberfläche, die keine Verschmutzung trug.

Ausgehend von der Grundlösung (im Folgenden als "KS 40-1a" bezeichnet), wurde eine Lösung hergestellt, bei der Tetranatriumpyrrophosphat gegen eine identische Gewichtsmenge Tetrakaliumpyrrophosphat ausgetauscht wurde (im Folgenden als "KS 40-2a" und "KS 40-2b" bezeichnet).

**Tabelle 3:**

| **KS 40-2a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | ja | ja | ja | ja |
| Eiweiß | ja | ja | ja | ja | ja | ja |
| Fett, pfl. | ja | ja | ja | ja | ja | ja |
| Salz | ja | ja | ja | ja | ja | ja |
| Stärke | ja | nein | nein | ja | (ja) | nein |
| Kalk | (ja) | (ja) | ja | (ja) | (ja) | (ja) |

| **KS 40-2b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | nein | ja | ja | ja |
| Eiweiß | ja | ja | ja | ja | ja | nein |
| Fett, pfl. | ja | nein | ja | ja | ja | ja |
| Salz | ja | ja | ja | ja | ja | ja |
| Stärke | nein | ja | nein | ja | nein | nein |
| Kalk | ja | ja | (ja) | ja | ja | (ja) |

Wie aus der Tabelle ersichtlich, hat der Austausch nur einen geringfügigen Einfluss auf das Nachweisverhalten.

### Beispiel 5: Einfluss des pH-Wertes der Grundlösung auf die Eignung der Grundlösung zum Nachweisen von Verschmutzungen auf verschieden Oberflächen

Der Nachweis des Einflusses des pH-Wertes auf die Eignung der Grundlösung zum Nachweisen von Verschmutzungen auf verschieden Oberflächen wurde getestet. Die Ergebnisse sind in der folgenden Tabelle zusammengefasst, wobei "Ja" bedeutet, dass die Verschmutzung nachgewiesen werden konnte, "Nein", dass die Verschmutzung nicht nachgewiesen werden konnte, und "(Ja)", dass der Befund unklar war. Der Nachweis der Verschmutzung erfolgte durch Feststellen, ob der Schaum an der die Verschmutzung tragenden Stelle der Oberfläche schneller zerfiel als an einer Stelle der Oberfläche, die keine Verschmutzung trug.

Ausgehend von der Grundlösung wurde eine Testlösung hergestellt, die weder Ammoniak noch Pyrrophosphat als alkalisch reagierende Verbindungen enthielt. Die solchermaßen hergestellte Testlösung (im Folgenden als "KS 40-12" bezeichnet) wies einen pH-Wert von ca. 7,5 auf.

**Tabelle 4:**

| **KS 40-12** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | nein | nein | nein | nein |
| Eiweiß | nein | ja | nein | ja | nein | nein |
| Fett, pfl. | ja | (ja) | nein | nein | nein | nein |
| Salz | ja | (ja) | nein | ja | ja | nein |
| Stärke | nein | (ja) | nein | (ja) | nein | nein |
| Kalk | (ja) | (ja) | nein | (ja) | (ja) | nein |

Wie aus der Tabelle ersichtlich, weist das Vorhandensein von alkalisch reagierenden Verbindungen einen erheblichen Einfluss auf die Leistungsfähigkeit des erfindungsgemäßen Verfahrens auf.

### Beispiel 6: Einfluss des Vorhandenseins von Tensid in der Grundlösung auf die Eignung der Grundlösung zum Nachweisen von Verschmutzungen auf verschieden Oberflächen

Der Nachweis des Einflusses von Tensid auf die Eignung der Grundlösung zum Nachweisen von Verschmutzungen auf verschieden Oberflächen wurde getestet. Die Ergebnisse sind in der folgenden Tabelle zusammengefasst, wobei "Ja" bedeutet, dass die Verschmutzung nachgewiesen werden konnte, "Nein", dass die Verschmutzung nicht nachgewiesen werden konnte, und "(Ja)", dass der Befund unklar war. Der Nachweis der Verschmutzung erfolgte durch Feststellen, ob der Schaum an der die Verschmutzung tragenden Stelle der Oberfläche schneller zerfiel als an einer Stelle der Oberfläche, die keine Verschmutzung trug.

Ausgehend von der Grundlösung wurden Testlösungen hergestellt, die kein Tensid, d.h. kein anionisches Tensid ("KS 40-11"), die halbe Menge des Tensids ("KS 40-15") oder die doppelte Gewichtsmenge an Tensid enthielten ("KS 40-14").

**Tabelle 5:**

| **KS 40-11** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | ja | nein | nein | nein |
| Eiweiß | ja | ja | nein | ja | ja | nein |
| Fett, pfl. | ja | nein | ja | nein | ja | nein |
| Salz | ja | ja | ja | ja | ja | nein |
| Stärke | ja | (ja) | (ja) | (ja) | ja | nein |
| Kalk | (ja) | (ja) | (ja) | (ja) | (ja) | nein |
| | | | | | | |

| **KS 40-15** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | (ja) | nein | nein | nein | nein |
| Eiweiß | ja | ja | nein | ja | (ja) | ja |
| Fett, pfl. | ja | ja | ja | ja | (ja) | ja |
| Salz | ja | ja | ja | ja | ja | ja |
| Stärke | ja | (ja) | nein | (ja) | (ja) | nein |
| Kalk | (ja) | (Ja) | (ja) | (ja) | (ja) | nein |
| | | | | | | |

| **KS 40-14** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | nein | nein | ja | ja |
| Eiweiß | ja | ja | nein | ja | (ja) | ja |
| Fett, pfl. | ja | nein | ja | (ja) | ja | ja |
| Salz | ja | ja | ja | ja | ja | ja |
| Stärke | (ja) | nein | (ja) | (ja) | (ja) | nein |
| Kalk | (ja) | (ja) | (ja) | (ja) | (ja) | nein |

Wie aus der Tabelle ersichtlich, bedingt das Fehlen des Tensids eine Verschlechterung der Leistungsfähigkeit des Verfahrens. Die Verdoppelung der Gewichtsmenge des Tensids führte zu keiner Änderung des Verhaltens der Testlösungen.

### Beispiel 7: Einfluss des Vorhandenseins von Lösemittel in der Grundlösung auf die Eignung der Grundlösung zum Nachweisen von Verschmutzungen auf verschieden Oberflächen

Der Nachweis des Einflusses von Lösemittel auf die Eignung der Grundlösung zum Nachweisen von Verschmutzungen auf verschieden Oberflächen wurde getestet. Die Ergebnisse sind in der folgenden Tabelle zusammengefasst, wobei "Ja" bedeutet, dass die Verschmutzung nachgewiesen werden konnte, "Nein", dass die Verschmutzung nicht nachgewiesen werden konnte, und "(Ja)", dass der Befund unklar war. Der Nachweis der Verschmutzung erfolgte durch Feststellen, ob der Schaum an der die Verschmutzung tragenden Stelle der Oberfläche schneller zerfiel als an einer Stelle der Oberfläche, die keine Verschmutzung trug.

Ausgehend von der Grundlösung wurden Testlösungen hergestellt, die kein Lösemittel enthielten ("KS 40-13") oder bei denen Butylglykol gegen Butanol ("KS 40-4a"), "KS 40-4b"), Butylglykol gegen sekundäres Butanol ("KS 40-5a", "KS 40-5b"), Butylglykol gegen Monopropylglycol ("KS 40-6a", "KS 40-6b"), Butylglykol gegen Dipropylenglycol ("KS 40-7a", "KS 40-7b"), Butylglykol gegen Monoethylenglycol ("KS 40-8a", "KS 40-8b"), Butylglycol gegen Diethylenglycol ("KS 40-9a", "KS 40-9b") und Ethanol gegen eine gleiche Gewichtsmenge an Isopropanol (KS 40-10a "KS 40-10b") ausgetauscht wurde.

Die Ergebnisse sind in der folgenden Tabelle zusammengefasst, aus der sich ergibt, dass das Fehlen von Ethanol und Butylglycol, welche beispielhaft als lineare Alkohole verwendet wurden, einen negativen Effekt auf das erfindungsgemäße Verfahren hat.

**Tabelle 7:**

| **KS 40-13** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | nein | nein | nein | nein | nein | nein |
| Eiweiß | nein | (ja) | nein | nein | (ja) | nein |
| Fett, pfl. | ja | (ja) | nein | nein | nein | nein |
| Salz | nein | ja | nein | nein | ja | nein |
| Stärke | nein | (ja) | nein | (ja) | (ja) | nein |
| Kalk | (ja) | (ja) | nein | (ja) | (ja) | nein |
| | | | | | | |

| **KS 40-4a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | (ja) | nein | nein | (ja) | nein |
| Eiweiß | ja | ja | nein | ja | ja | nein |
| Fett, pfl. | ja | nein | nein | nein | nein | nein |
| Salz | ja | ja | (ja) | ja | ja | nein |
| Stärke | (ja) | (ja) | ja | ja | ja | nein |
| Kalk | (ja) | nein | (ja) | (ja) | (ja) | nein |

| **KS 40-4b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | ja | nein | ja | nein | nein |
| Eiweiß | ja | ja | nein | ja | nein | nein |
| Fett, pfl. | ja | nein | ja | nein | nein | nein |
| Salz | ja | ja | ja | ja | nein | nein |
| Stärke | ja | (ja) | nein | ja | (ja) | nein |
| Kalk | (ja) | (ja) | (ja) | (ja) | (ja) | nein |

| **KS 40-5a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | ja | nein | (ja) | nein |
| Eiweiß | ja | ja | nein | ja | ja | ja |
| Fett, pfl. | ja | nein | ja | nein | ja | ja |
| Salz | ja | ja | ja | ja | ja | nein |
| Stärke | (ja) | nein | ja | (ja) | nein | nein |
| Kalk | (ja) | (ja) | ja | (ja) | (ja) | nein |

| **KS 40-5b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | nein | nein | ja | nein |
| Eiweiß | (ja) | ja | nein | ja | ja | ja |
| Fett, pfl. | ja | ja | ja | nein | ja | ja |
| Salz | ja | ja | ja | ja | ja | nein |
| Stärke | (ja) | nein | nein | (ja) | ja | nein |
| Kalk | (ja) | ja | (ja) | (ja) | (ja) | nein |

| **KS 40-6a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | (ja) | ja | nein | nein | nein |
| Eiweiß | nein | ja | ja | ja | nein | nein |
| Fett, pfl. | ja | nein | nein | nein | nein | nein |
| Salz | ja | (ja) | nein | nein | nein | nein |
| Stärke | nein | nein | nein | nein | nein | nein |
| Kalk | nein | (ja) | (ja) | nein | (ja) | nein |

| **KS 40-6b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | (ja) | nein | (ja) | nein |
| Eiweiß | (ja) | ja | nein | nein | (ja) | nein |
| Fett, pfl. | ja | nein | nein | nein | nein | nein |
| Salz | (ja) | ja | ja | ja | ja | nein |
| Stärke | nein | ja | nein | nein | (ja) | nein |
| Kalk | nein | (ja) | nein | (ja) | (ja) | nein |

| **KS 40-7a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | nein | nein | (ja) | nein | nein | nein |
| Eiweiß | nein | ja | nein | ja | (ja) | nein |
| Fett, pfl. | ja | nein | (ja) | nein | nein | ja |
| Salz | ja | ja | nein | ja | (ja) | nein |
| Stärke | ja | nein | nein | nein | (ja) | nein |
| Kalk | (ja) | nein | (ja) | (ja) | (ja) | nein |

| **KS 40-7b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | nein | nein | nein | nein | (ja) | nein |
| Eiweiß | nein | ja | nein | ja | ja | nein |
| Fett, pfl. | ja | nein | nein | nein | nein | ja |
| Salz | ja | (ja) | nein | ja | (ja) | nein |
| Stärke | nein | (ja) | nein | (ja) | nein | nein |
| Kalk | nein | (ja) | nein | (ja) | (ja) | nein |

| **KS 40-8a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | nein | nein | nein | nein |
| Eiweiß | ja | ja | nein | ja | nein | nein |
| Fett, pfl. | ja | nein | ja | nein | nein | nein |
| Salz | ja | ja | nein | nein | nein | nein |
| Stärke | ja | nein | nein | nein | (ja) | nein |
| Kalk | ja | nein | nein | nein | (ja) | nein |

| **KS 40-8b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | (ja) | nein | (ja) | nein | nein |
| Eiweiß | ja | ja | nein | ja | nein | nein |
| Fett, pfl. | ja | nein | ja | nein | (ja) | nein |
| Salz | ja | (ja) | nein | ja | ja | nein |
| Stärke | ja | nein | nein | (ja) | (ja) | nein |
| Kalk | (ja) | (ja) | nein | (ja) | (ja) | nein |

| **KS 40-9a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | ja | nein | nein | nein |
| Eiweiß | ja | ja | nein | nein | nein | nein |
| Fett, pfl. | ja | ja | (ja) | nein | nein | nein |
| Salz | ja | ja | nein | nein | nein | nein |
| Stärke | ja | nein | nein | nein | nein | nein |
| Kalk | ja | nein | (ja) | nein | (ja) | nein |

| **KS 40-9b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | nein | nein | nein | nein | nein | nein |
| Eiweiß | nein | (ja) | nein | (ja) | nein | nein |
| Fett, pfl. | nein | nein | nein | nein | nein | nein |
| Salz | nein | (ja) | nein | (ja) | ja | nein |
| Stärke | nein | nein | nein | nein | nein | nein |
| Kalk | nein | (ja) | (ja) | (ja) | (ja) | nein |

| **KS 40-10a** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | ja | nein | nein | nein | nein |
| Eiweiß | ja | nein | nein | ja | ja | nein |
| Fett, pfl. | ja | ja | nein | (ja) | nein | ja |
| Salz | ja | ja | ja | ja | ja | nein |
| Stärke | ja | ja | ja | ja | ja | nein |
| Kalk | (ja) | (ja) | (ja) | (ja) | (ja) | nein |

| **KS 40-10b** | Sprühkopf Lind 63/21 original, Wirbel 0,18 | | | | | |
|---|---|---|---|---|---|---|
| | Edelstahl | Wandfliese | PVC | Glas | Plexiglas | Marmor |
| Zucker | ja | nein | nein | nein | (ja) | nein |
| Eiweiß | ja | ja | nein | ja | nein | nein |
| Fett, pfl. | ja | nein | ja | ja | (ja) | ja |
| Salz | ja | ja | nein | ja | ja | nein |
| Stärke | ja | nein | nein | nein | (ja) | nein |
| Kalk | (ja) | (ja) | nein | (ja) | (ja) | nein |

### Beispiel 8: Messen der Schaumeigenschaften der wässrigen Lösung KS 40-1a

Die Schaumeigenschaften der in Beispiel 1 beschriebenen wässrigen Lösung KS 40-1a wurden mittels des Messgerätes KRÜSS DFA 100 der Fa. KRÜSS GmbH, Hamburg, Deutschland, bestimmt.

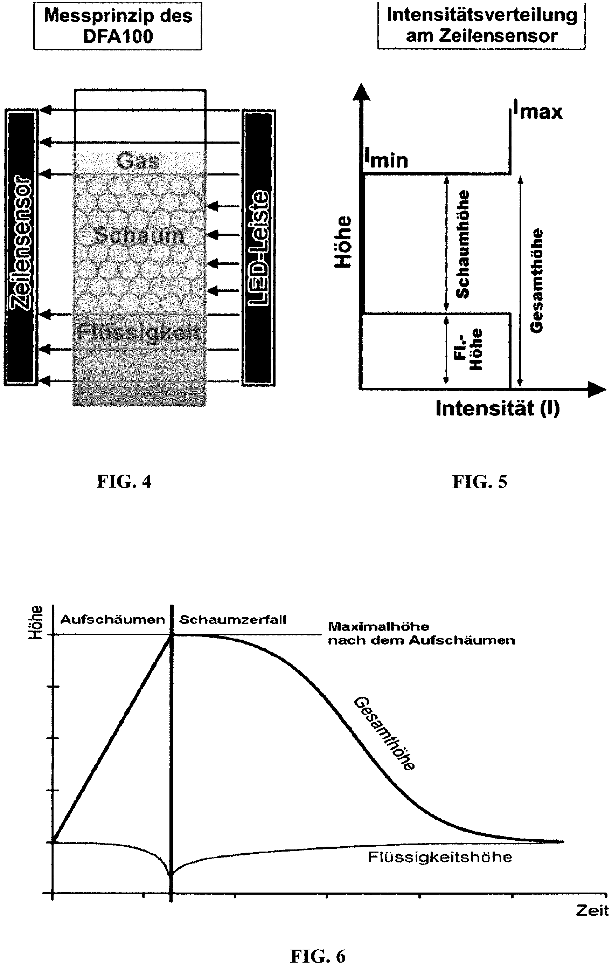

Das DFA 100 ermöglicht die Untersuchung des Aufschäumverhaltens von Flüssigkeiten und des Zerfalls des Schaums. Die Testflüssigkeit wurde in einer transparenten Messsäule vorgelegt, die sich zwischen einer LED-Leiste und einem Zeilensensor befindet. Zum Aufschäumen wurde Luft von unten durch eine Filterplatte in die Testflüssigkeit gepumpt. Der Zeilensensor erfasst über seine gesamte Höhe die Lichttransmission durch die Messsäule. Die Gasphase oberhalb des Schaums und die Testflüssigkeit sind lichtdurchlässig, während die Schaumsäule einen Teil des emittierten Lichts absorbiert. Die Messanordnung ist in Fig. 4 veranschaulicht. Anhand der gemessenen Helligkeitsunterschiede werde die beiden Phasengrenzen Flüssigkeit/ Schaum und Schaum/Luft detektiert. Dieses Mess- und Auswerteprinzip ist in Fig. 5 dargestellt.

Die Schaumhöhe ergibt sich aus Differenz zwischen Gesamthöhe und Flüssigkeitshöhe. Bei einer Messung wurde sowohl der Aufschäumung als auch der Zerfall des Schaums beobachtet. Während der gesamten Messdauer wurden Einzelbilder vom Zeilensensor ausgelesen. Die Schaum- und Flüssigkeitshöhe wurden auf diese Weise zeitabhängig erfasst (siehe Fig. 6).

Wie aus Fig. 6 ersichtlich nimmt während des Aufschäumvorgangs die Gesamthöhe (Schaumhöhe + Flüssigkeitshöhe) zu, während die Flüssigkeitshöhe abnimmt. Beim Zerfallsvorgang nimmt die Flüssigkeitshöhe aufgrund von Drainage und wegen Kollabierens der Schaumlamellen wieder zu. Die Gesamthöhe weist bei vielen Schäumen den oben gezeigten charakteristischen Wendepunktverlauf auf.

### Messwerte/Ergebnisse

Die Probe wurde bei Umgebungstemperatur T = 28°C vermessen.

Die Messparameter für die Schaumeigenschaften lauteten wie folgt:

| | |
|---|---|
| Volumen der Probe: | 50ml |
| Höhe der Schaumphase ("Foaming Phase Height"): | 120 mm |
| Gasströmungsgeschwindigkeit ("Gas Flow Rate"): | 0,3 L/min |
| Filter Typ: Filter Platte G2 (40-100µm) | |
| Gesamtmesszeit ("Total Measuring time"): | 240s |

Die Messungen wurden automatisch durchgeführt und ausgewertet.

**Schaumbildung (Foamability):**

| | |
|---|---|
| Pumpzeit bis Erreichen der Höhe 120 mm: | t(max)= 13.0s |
| Gesamthöhe mit Pumpe ("Total Height Pump"): | 149.5 ± 0.92 |
| Maximale Gesamthöhe ("Total Height Max"): | 151.0 ± 1.56 |
| Maximale Schaumhöhe ("Foam Height Max"): | 92.8 ± 1.48 |
| Schaumkapazität ("Foam Capacity"): | 2.2 ± 0.0 |
| Schaumdichte ("Foam Density"): | 0.20 ± 0.0 |

**Schaumstabilität (Foam Stability):**

| | |
|---|---|
| t (Zerfall ("decay")): | 14.8 ± 0.18s |
| t (Wendepunkt ("inflection"): | 23.6 ± 1.13 s |
| Halbwertszeit ("Half- Life (HL) time"): | 180.8 ± 2.9 s |

Aus den Ergebnissen der Schaumhöhen- und Schaumstrukturmessung an der Zusammensetzung KS 40-1a lassen sich folgende Schlussfolgerungen ziehen:
- Aus einem Volumen von 50 ml der Lösung KS 40-1 a wurde mit einer Pumpzeit von 13 s eine maximale Höhe aus Flüssigkeit und Schaum von 151 mm erzeugt, wobei der Anteil der Schaumhöhe daran 93 mm beträgt.
- Die Initialzeit t(decay), bei der das "Zerplatzen" der Blasen beginnt, wurde mit 15 s bestimmt.
- Die Zeit t(inflection) (Zeit des "Wendepunktes" der Zerfallsgeschwindigkeit der Blasen) wurde mit 24 s bestimmt.
- Die Halbwertszeit der Schaumbildung beträgt etwa 180 s. Dies heißt, dass nach 180 s die Hälfte des gesamten Schaumes in der Glassäule zerfallen ist.

Diese Werte der gemessenen Parameter deuten bei Berücksichtigung der Pumpzeit von 13s, die in der Initialzeit von 15 s enthalten ist, daraufhin, dass es sich um einen relativ schnell zerfallenden Schaum handelt.

Des Weiteren konnte festgestellt werden, dass der von KS 40-1a hergestellte Schaum ein inhomogener Schaum ist, wobei eine Verteilung von keinen und großen Blasen bereits nach 20 s sichtbar ist, und im Verlauf der Messzeit die Anzahl der großen Blasen deutlich zunimmt, wobei die Zunahme der Anzahl der größeren Blasen auf eine reine Koaleszenz bzw. die Ostwaldreifung zurückführbar sein kann.

### Beispiel 9: Messen des Flüssigkeitsgehaltes eines von der wässrigen Lösung KS 40-1a gebildeten Schaumes

Bei bekannter Leitfähigkeit einer Lösung kann aus der gemessenen Leitfähigkeit eines gebildeten Schaums der Flüssigkeitsgehalt des Schaums berechnet werden. Im vorliegenden Beispiel wurde der Flüssigkeitsgehalt eines Schaumes der in Beispiel 1 beschriebenen wässrigen Lösung KS 40-1a unter Verwendung des Messgerätes KRÜSS DFA 100 der Fa. KRÜSS GmbH, Hamburg, Deutschland, zeit- und höhenabhängig bestimmt. Der Flüssigkeitsgehalt wurde mit Hilfe von sieben Sensoren in sieben Höhenpositionen synchron gemessen. Ein achter Sensor bestimmt die Leitfähigkeit der flüssigen Phase der Probe als Referenzwert.

### Messparameter:

Die Probe wurde bei Umgebungstemperatur T = 28°C vermessen.

Die Messparameter für die Schaumeigenschaften lauteten wie folgt:

| | |
|---|---|
| Probenvolumen ("Sample Volume"): | 50ml |
| Schaumhöhe ("Foaming Phase Height"): | 120 mm |
| Gasflussgeschwindigkeit ("Gas flow Rate"): | 0,3 L/min |
| Filter Typ: Filter Platte G2 (40-100µm) | |
| Gesamtmesszeit ("Total Measuring time"): | 240s |

Die Messungen wurden automatisch durchgeführt und ausgewertet.

Die Ergebnisse sind in der folgenden Tabelle angegeben, wobei
- "Max. Liquid Content Value" den höchsten an dem jeweiligen Sensor gemessenen Wert des Flüssigkeitsgehalts bezeichnet;
- "Max. Liquid Content Time" den dem höchsten Wert entsprechenden Zeitpunkt bezeichnet, gemessen vom Beginn des Aufschäumens.
- "Liquid Content Half Life" die Zeit bezeichnet, nach der der maximale Flüssigkeitsgehalt auf die Hälfte zurückgegangen ist; gemessen vom Zeitpunkt des auftretenden Maximums.

| Sensor | Max. Liquid Content Value[%] | Max. Liquid Content Time[s] | Liquid Content Half Life [s] |
|---|---|---|---|
| 1 | 35,75 ± 0,49 | 7,65 ± 0,07 | 65,25 ± 12,90 |
| 2 | 26,9 ± 0,99 | 10,45 ± 0,21 | 73,70 ± 9,33 |
| 3 | 24,05 ± 1,34 | 12,75 ± 0,07 | 60,15 ± 5,30 |
| 4 | 20,65 ± 1,20 | 14,55 ± 0,64 | 48,05 ± 4,88 |
| 5 | 17,65 ± 1,34 | 15,35 ± 0,35 | 36,7 ± 0,42 |
| 6 | 14,35 ± 1,62 | 16,15 ± 0,07 | 18,5 ± 0,7 |
| 7 | 9,45 ± 0,49 | 17,05 ± 0,49 | 9,7 ± 2,40 |

Aus den Ergebnissen der Leitfähigkeitsmessung lassen sich folgende Schlussfolgerungen ziehen:
- Es ist eine Abhängigkeit des Flüssigkeitsgehaltes von der Höhenpositionierung der Sensoren feststellbar.
- Der im unteren Teil der Messzelle befindliche Sensor 1 detektiert den höchsten Flüssigkeitsgehalt mit 36 Vol-%. Der im oberen Teil der Messzelle befindliche Sensor 7 detektiert den niedrigsten Flüssigkeitsgehalt mit 5 Vol-%.

Anhand dieser Messwerte des Flüssigkeitsgehaltes im Schaum lässt sich feststellen, dass es sich bei dem getesteten Schaum um einen sehr feuchten Schaum handelt., wobei man typischerweise erst bei einem Flüssigkeitsgehalt eines Schaumes von < 1 Vol-% von einem trockenen Schaum spricht.

Die in der vorstehenden Beschreibung, den Ansprüchen sowie den, Zeichnungen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Nachweisen einer Verschmutzung auf einer Oberfläche, umfassend die folgenden Schritte:
- Aufbringen eines Schaumes einer wässrigen Lösung auf die Oberfläche, und
- Bestimmen, ob an einer oder mehreren Stellen der Oberfläche von dem Schaum gebildeten Schaumlamellen gebrochen werden, und/oder
- Bestimmen, ob an einer oder mehreren Stellen der Oberfläche die Elastizität des Schaumes verringert wird,
wobei eine Verschmutzung vorliegt, wenn die gebildeten Schaumlamellen gebrochen sind und/oder die Elastizität des Schaumes verringert ist.

2. Verfahren nach Anspruch 1, **dadurch gekennzeichnet, dass** die gebildeten Schaumlamellen schneller gebrochen werden an einer Stelle der Oberfläche, die eine Verschmutzung aufweist, als an einer Stellen der Oberfläche, die keine Verschmutzung aufweist, und/oder dass die Elastizität des Schaumes stärker verringert ist oder schneller verringert ist an einer Stelle der Oberfläche, die eine Verschmutzung aufweist, als an einer Stellen der Oberfläche, die keine Verschmutzung aufweist.

3. Verfahren zum Nachweisen einer Verschmutzung auf einer Oberfläche, bevorzugterweise ein Verfahren nach einem der Ansprüche 1 bis 2, wobei das Verfahren Aufbringen eines Schaumes einer wässrigen Lösung auf die Oberfläche umfasst, wobei der Schaum an der Stellte der Oberfläche zerfällt, die die Verschmutzung aufweist.

4. Verfahren nach Anspruch 3, **dadurch gekennzeichnet, dass** der Schaum an der Stelle der Oberfläche schneller zerfällt, die die Verschmutzung aufweist, als der Schaum an einer Stelle der Oberfläche, die keine Verschmutzung aufweist.

5. Verfahren nach einem der Ansprüche 1 bis 4, **dadurch gekennzeichnet, dass** die wässrige Lösung ein Lösemittel umfasst.

6. Verfahren nach einem der Ansprüche 1 bis 5, **dadurch gekennzeichnet, dass** die wässrige Lösung eine alkalisch reagierende Verbindung umfasst.

7. Verfahren nach einem der Ansprüche 1 bis 6, **dadurch gekennzeichnet, dass** die wässrige Lösung ein Tensid umfasst.

8. Verfahren nach einem der Ansprüche 1 bis 7, **dadurch gekennzeichnet, dass** die wässrige Lösung einen pH-Wert > 7 aufweist, bevorzugterweise einen pH-Wert ≥ 7,5 aufweist,

9. Verfahren nach einem der Ansprüche 1 bis 8, **dadurch gekennzeichnet, dass** die wässrige Lösung unter Druck steht.

10. Verfahren nach einem der Ansprüche 1 bis 11, **dadurch gekennzeichnet, dass** die wässrige Lösung eine unter Druck stehende wässrige Lösung ist, wobei die unter Druck stehende Lösung die folgende Zusammensetzung aufweist:
| | | |
|---|---|---|
| - Wasser deionisiert: | 78,4 - 93,7 | Gew.-% |
| - Tetranatriumpyrrophoshphat | 0,02 - 0,3 | Gew.-% |
| - Elfan NS 252 28%ig | 0,002 - 0,1 | Gew.-% |
| - Butylglykol | 2,0 - 6,0 | Gew.-% |
| - Ethanol 641, 96%ig MEK vergällt | 1,0 - 4,0 | Gew.-% |
| - Ammoniak-Lösung 25 % | 0,3 - 1,0 | Gew.-% |
| - Duftstoffgemisch | 0,01 - 0,5 | Gew.-% |
| - Propan/Butan 3,5 bar | 3,0 - 10,0 | Gew.-% , |
bevorzugterweise weist die unter Druck stehende Lösung die folgende Zusammensetzung auf:
| | | |
|---|---|---|
| - Wasser deionisiert: | 86,290 | Gew.-% |
| - Tetranatriumpyrrophoshphat | 0,099 | Gew.-% |
| - Elfan NS 252 28%ig | 0,005 | Gew.-% |
| - Butylglykol | 3,945 | Gew.-% |
| - Ethanol 641, 96%ig MEK vergällt | 1,973 | Gew.-% |
| - Ammoniak-Lösung 25 % | 0,641 | Gew.-% |
| - Duftstoffgemisch | 0,047 | Gew.-% |
| - Propan/Butan 3,5 bar | 7,000 | Gew.-%, |
wobei die Summe der Einzelbestandteile, insbesondere der vorstehend genannten Einzelbestandteil 100 Gew.-% beträgt.

11. Verfahren nach einem der Ansprüche 1 bis 10, **dadurch gekennzeichnet, dass** die Verschmutzung ausgewählt ist aus der Gruppe umfassend Verschmutzung mit Salz, Verschmutzung mit Kohlehydraten, Verschmutzung mit Proteinen, Verschmutzung mit Fetten, Verschmutzung mit Kalk, Verschmutzung mit Kalkseife, Verschmutzung mit Fruchtfleisch und Verschmutzung mit Leuchtstiftfarbe.

12. Verfahren nach einem der Ansprüche 1 bis 11, **dadurch gekennzeichnet, dass** die Oberfläche aus einem Material besteht, das ausgewählt ist aus der Gruppe umfassend Marmor, Keramik, Edelstahl, Kunststoff, Plexiglas und Glas.

13. Verwendung einer wässrigen Lösung wie in einem der vorstehenden Ansprüche definiert, zum Nachweisen einer Verschmutzung auf einer Oberfläche.

14. Verwendung eines Schaumes zum Nachweisen einer Verschmutzung auf einer Oberfläche, wobei der Schaum hergestellt ist auf der Grundlage der wässrigen Lösung nach einem der vorangehenden Ansprüche.

15. Verwendung eines Sprühkopfes zum Erzeugen eines Schaumes aus einer wässrigen Lösung wie in einem der vorstehenden Ansprüche definiert, wobei der Schaum zum Nachweisen einer Verschmutzung auf einer Oberfläche verwendet wird.
